# FASCICULE DE BREVET EUROPEEN

(11) **EP 1 516 535 B1**
(45) Date de publication et mention de la délivrance du brevet: **01.07.2015**
(21) Numéro de dépôt: 04292234.4
(22) Date de dépôt: 17.09.2004
(51) Int. Cl.: A21B 3/13

(54) **Moule souple avec poignées de préhension**
Flexible Backform mit Handgriff
Flexible mould with grip handle

(30) Priorité: 17.09.2003 FR 0310940
(43) Date de publication de la demande: 23.03.2005
(73) Titulaire: Mastrad, 75002 Paris (FR)
(72) Inventeur: Lion, Mathieu, 75002 Paris (FR)
(74) Mandataire: Plaçais, Jean Yves

(56) Documents cités:
- EP-A- 1 197 149
- DE-A1- 10 258 644
- FR-A- 1 590 193
- FR-A1- 2 827 494
- US-A- 4 080 884

## Description

### DOMAINE TECHNIQUE GENERAL.

La présente invention concerne les moules souples en silicone.

Plus précisément, elle concerne les moules souples en silicone pour les confections alimentaires, comme par exemple les confections de gâteaux, de tartes ou de quiches, de pains, etc. A cet effet, les moules en silicone faisant l'objet de l'invention sont aptes à être mis dans des fours à haute température. Les moules selon l'invention peuvent également servir pour la confection de glaces et sorbets par exemple, et sont donc aptes à être mis dans des congélateurs par exemple.

### ETAT DE L'ART.

Les moules souples en matière silicone pour les confections alimentaires sont connus depuis longtemps. On se réfèrera avantageusement par exemple aux documents US 2 182 454, US 3 844 525, US 5 300 747, US 2001/0043977, EP 0 992 195, EP 1 197 149, FR 1 590 193, FR 2 747 885, FR 2 747 886, FR 2 786 667, FR 2 786 668, FR 2 827 494, CH 443 870 et GB 1 159 021.

On remarque ainsi que les moules entièrement en silicone sont très pratiques, car ils permettent un démoulage aisé des produits hors des moules. Ils peuvent également être rangés facilement après leur utilisation.

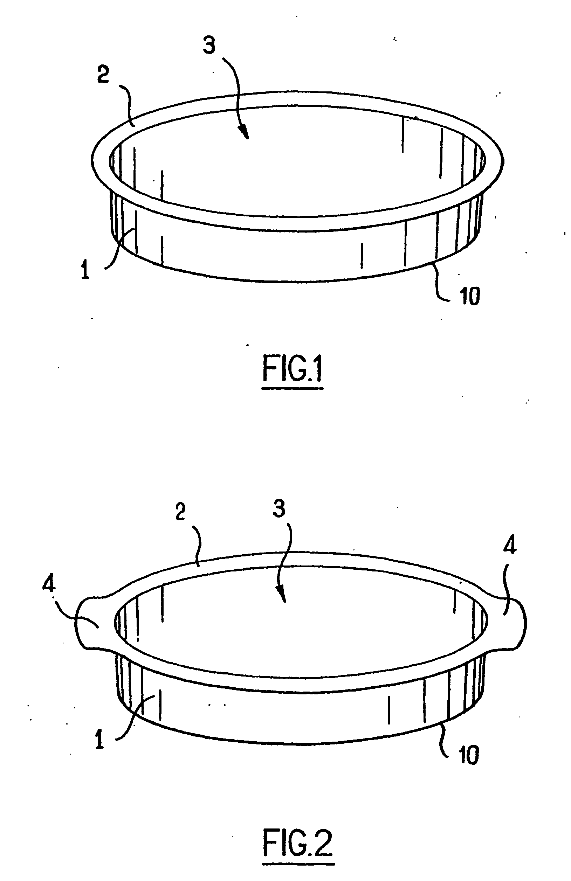

La figure 1 représente un moule classique en silicone selon l'art antérieur. Il comporte ainsi une cuvette souple en silicone 1 et une couronne périphérique 2 définissant une embouchure 3.

Cependant, les moules entièrement en silicone peuvent provoquer des problèmes de manipulation et/ou de sécurité.

En effet, du fait de leur trop grande souplesse au niveau de la couronne 2 de l'embouchure 3, il est difficile de manipuler le moule et de le déplacer d'un endroit à un autre, notamment lorsque ce dernier est rempli d'un liquide. La trop grande souplesse de la couronne 2 peut également engendrer une détérioration de la préparation culinaire lors du démoulage.

Cette manipulation malaisée est notamment dangereuse lorsque le moule contient des produits ou des liquides chauds.

Les solutions proposées par l'art antérieur pour résoudre ce problème de manipulation difficile et/ou dangereuse ont tendance à renforcer la couronne 2 du moule sur toute sa périphérie. Ce renfort se matérialise généralement par l'adjonction à la couronne 2 d'un jonc rigide sur toute la périphérie de l'embouchure 3. Ce jonc peut être en différentes matières et de différentes formes. Il est noyé dans le matériau silicone, voir FR 2 827 494, ou rapporté extérieurement à la couronne 2 de façon amovible.

Les solutions de l'art antérieur ne donnent cependant pas tout à fait satisfaction.

En effet, le moule perd de sa flexibilité et est plus difficile à ranger après utilisation. Son encombrement est toujours au moins égal à l'encombrement du jonc.

De plus, la planéité, la géométrie ou l'horizontalité de la couronne 2 sont difficiles à apprécier de la part d'un utilisateur du moule. En effet, du fait que le jonc de renfort a une section droite circulaire, l'utilisateur n'a pas de moyen d'apprécier la planéité ou l'horizontalité de la couronne grâce à ces deux mains lorsqu'il appréhende le moule. Il peut donc résulter un renversement d'un liquide contenu dans le moule lors du déplacement du moule d'un endroit à un autre.

Un utilisateur ne peut pas non plus changer la géométrie de la couronne pour un meilleur démoulage par exemple.

### PRESENTATION DE L'INVENTION.

L'invention propose de pallier ces inconvénients.

Un but de l'invention est de proposer un moule en silicone qui permette un démoulage facile de son contenu, mais dont la manipulation soit d'une part facile et d'autre part non dangereuse.

Un autre but de l'invention est également de proposer un moule dont un utilisateur puisse facilement apprécier la planéité, la géométrie et l'horizontalité de l'embouchure, afin d'éviter le renversement de contenu et afin d'en faciliter le démoulage.

Un autre but de l'invention est de proposer un moule souple en silicone qui puisse facilement être rangé après utilisation.

Les inventeurs ont ainsi constaté que, contrairement à ce que propose l'art antérieur pour augmenter la sécurité du moule en renforçant la couronne sur toute la périphérie de l'embouchure, il suffit de prévoir des zones de préhension sensiblement planes et opposées sur la couronne pour permettre à un utilisateur de pouvoir manipuler le moule et le déplacer d'un endroit à un autre, de façon non dangereuse. Les zones de préhension permettent notamment d'apprécier la planéité de la couronne ainsi que son horizontalité.

Le moule garde ainsi sa souplesse au niveau de l'embouchure du moule, et l'utilisateur peut en contrôler la géométrie.

Ainsi, pour résoudre les problèmes des moules de l'art antérieur, l'invention propose un moule souple en silicone comportant une cuvette et une couronne périphérique définissant une embouchure de la cuvette. Le moule comporte au niveau de la couronne deux zones de préhension généralement planes au moins sensiblement opposées sur la couronne, les deux zones présentant une extension suffisante pour permettre à un utilisateur de contrôler la géométrie de la couronne, ainsi que l'horizontalité et la coplanéité des deux zones de préhension chaque zone de préhension comporte un renfort sensiblement plan noyé dans le silicone.

Selon l'invention chaque renfort est divisé en deux parties sensiblement symétriques par rapport à un plan passant sensiblement par le centre des zones de préhension.

L'invention est avantageusement complétée par les caractéristiques suivantes, prises seules ou en une quelconque de leur combinaison techniquement possible :
- chaque moitié de renfort comporte une lame d'extension dans la couronne ;
- chaque lame relie deux renforts de deux zones de préhension différentes et couvre ainsi sensiblement 180° ;
- chaque renfort comporte une lame d'extension dans la couronne, la lame s'étendant de part et d'autre du renfort ;
- les extrémités des lames d'extension viennent sensiblement au niveau d'un plan perpendiculaire à un plan passant sensiblement par le centre des zones de préhension, chaque lame couvrant ainsi sensiblement 180° ;
- les lames d'extension ou les moitiés des renforts sont reliées par des moyens formant charnière ;
- la couronne comporte une épaisseur de matière silicone plus importante que l'épaisseur des parois de la cuvette ;
- chaque lame d'extension est sensiblement plane ;
- le moule comporte un renfort au niveau de la base de la cuvette ;
- le renfort comporte un jonc sur le pourtour de la base ; et
- le renfort comporte une plaque.

### PRESENTATION DES FIGURES.

D'autres caractéristiques, buts et avantages de l'invention ressortiront de la description qui suit, qui est purement illustrative et non limitative, et qui doit être lue en regard des dessins annexés sur lesquels :
- la figure 1, déjà commentée, représente schématiquement un moule souple de l'art antérieur ;
- la figure 2 représente schématiquement un premier mode de réalisation d'un moule selon l'invention comportant des zones de préhension ;
- la figure 3 représente schématiquement un deuxième mode de réalisation d'un moule selon l'invention, comportant des renforts sur les zones de préhension ;
- la figure 4 représente schématiquement un troisième mode de réalisation d'un moule selon l'invention où les renforts sont divisés en deux parties ;
- la figure 5 représente schématiquement selon une vue radiale la déformation possible d'un moule selon la figure 4 ;
- la figure 6 représente schématiquement un quatrième mode de réalisation d'un moule selon l'invention, correspondant à un moule selon la figure 4 possédant des lames d'extension dans la couronne du moule ;
- la figure 7 représente schématiquement un cinquième mode de réalisation d'un moule selon l'invention comportant d'autres lames d'extension ; et
- la figure 8 représente schématiquement selon une vue radiale la déformation possible d'un moule selon la figure 7.

### DESCRIPTION DETAILLEE.

La figure 2 représente schématiquement un premier mode de réalisation d'un moule selon l'invention.

Selon la figure 2, le moule souple en silicone comporte principalement une cuvette 1 souple et une couronne périphérique 2 définissant une embouchure 3 de la cuvette 1.

La cuvette 1 est destinée à recevoir les liquides et/ou les préparations culinaires à mettre au four ou au congélateur. On rappelle en effet que le moule selon l'invention peut servir aux confections de gâteaux, de tartes ou de quiches, de pains, etc. Le moule selon l'invention peut également servir pour la confection de glaces et sorbets par exemple.

Le moule est donc fabriqué en silicone alimentaire pouvant supporter les hautes et les basses températures. Il peut notamment aller au four à micro-ondes.

La cuvette 1 est généralement cylindrique de révolution. Elle comporte préférentiellement une forme s'évasant de la base 10 vers la couronne 2, de sorte que le démoulage de la préparation soit facilité. Le diamètre intérieur de la cuvette au niveau de la couronne 2 est par exemple de l'ordre de 260 mm, tandis que le diamètre de la base 10 est de l'ordre de 225 mm.

La couronne périphérique 2 s'étend principalement parallèlement à la base 10. L'extension au-delà des parois de la cuvette est par exemple de l'ordre de 7 à 10 mm, voire au-delà.

La couronne 2 comporte préférentiellement une épaisseur de matière silicone plus importante que l'épaisseur des parois de la cuvette 1. Par exemple, l'épaisseur de silicone au niveau de la couronne peut être de l'ordre de 7 mm ou plus, tandis que l'épaisseur des parois de la cuvette est de l'ordre de 1.5 à 5 mm par exemple. Cette surépaisseur permet un meilleur démoulage de la préparation.

La couronne peut comporter au niveau de la couronne 2 un bourrelet de matière venu des parois de la cuvette et renforçant encore cette surépaisseur.

Bien entendu, tous les exemples numériques donnés dans la présente description ne sont pas limitatifs et peuvent changer en fonctions des besoins des applications du moule.

Le moule comporte au niveau de la couronne 2 deux zones 4 de préhension généralement planes au moins sensiblement opposées sur la couronne 2. Les deux zones 4 présentent une extension suffisante pour permettre à un utilisateur de prendre et déplacer le moule. Elles permettent de contrôler la géométrie de la couronne 2, ainsi que l'horizontalité et la coplanéité des deux zones de préhension 4, et ce malgré la souplesse de la zone intermédiaire de la couronne 2.

Par exemple, les zones 4 peuvent être de forme sensiblement en demi-lune. Chaque demi-lune 4 s'étend sur la couronne sur une distance couvrant environ 150 mm par exemple, et s'étend radialement au maximum sur une distance de 35 à 50 mm environ.

Bien entendu, l'exemple de la forme de chaque zone 4 de préhension n'est pas limitatif. Chaque zone 4 peut avoir une forme quelconque, par exemple carrée, rectangulaire, trapézoïdale, etc.

Chaque zone 4 de préhension peut également être recouverte de motifs permettant une meilleure prise de la zone 4 par un utilisateur, ces motifs étant éventuellement décoratifs également. Ces motifs peuvent se présenter sous formes de picots ou de reliefs de forme quelconque venue de matière sur la zone 4.

La surface de chaque zone 4 peut également être granulée pour offrir des propriétés d'anti-dérapage.

Le fait que les zones 4 soient d'extension suffisante permet à un utilisateur de pouvoir contrôler la géométrie de la zone intermédiaire de la couronne 2 et ainsi faciliter le démoulage, et permet un pliage du moule après son utilisation.

Les zones 4 sont planes, ce qui permet d'offrir à un utilisateur des repères quant à la coplanéité des zones 4 entre elles, ainsi qu'un repère sur l'horizontalité de la couronne souple 2.

La manipulation du moule est ainsi facilité, et la sécurité augmentée.

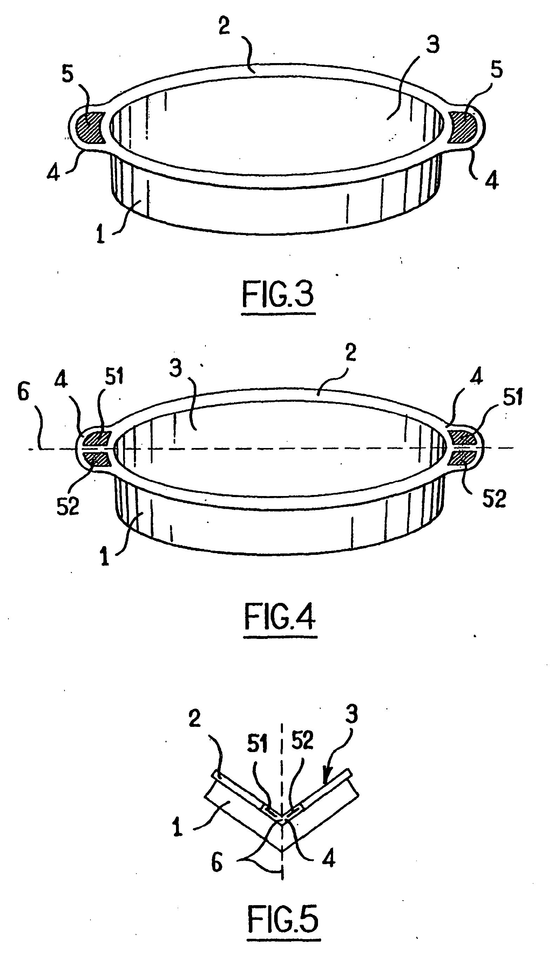

La figure 3 représente schématiquement un deuxième mode de réalisation d'un moule selon l'invention. Sur cette figure, comme sur l'ensemble des figures, les éléments semblables portent des références numériques similaires.

Sur la figure 3, on voit que chaque zone 4 comporte un renfort 5 sensiblement plan, noyé dans le silicone.

Le renfort 5 évite la déformation de la zone de préhension 4, du fait de l'extension et de la souplesse de chaque zone 4.

Chaque renfort 5 augmente également les propriétés de contrôle de la géométrie et de la coplanéité de chaque zone 4 en renforçant la prise possible d'un utilisateur, tout en n'agissant pas sur la flexibilité de la couronne 2.

Chaque renfort 5 peut être par exemple en métal, en matière plastique, en fibre de verre, ou préférentiellement en nylon.

Chaque renfort 5 est sensiblement de la forme de chaque zone 4 pour ne pas agir sur la flexibilité de la couronne souple 2. Il est par exemple en forme de demi-lune ou rectangulaire par exemple.

La figure 4 représente schématiquement un troisième mode de réalisation d'un moule selon l'invention.

Selon ce mode de réalisation, chaque renfort 5 est divisé en deux parties 51 et 52 sensiblement symétriques par rapport à un plan 6 passant sensiblement par le centre des zones 4 de préhension.

Le principal intérêt d'une telle césure de chaque renfort 5 est de permettre un pliage du moule comme le montre la figure 5. Un tel pliage selon le plan 6 permet un meilleur démoulage de la préparation, ainsi qu'un rangement plus facile du moule après utilisation.

Les côtés des moitiés de chaque renfort 51 et 52 situés près du plan 6 sont arrondis et non tranchants. Cela évite de détériorer et de couper le silicone lors du pliage selon la figure 5.

Selon une variante, les deux moitiés 51 et 52 de chaque renfort 5 sont reliées entre elles par des moyens formant charnière.

Selon une autre variante du mode de réalisation des figures 4 et 5, chaque moitié de renfort 51 ou 52 comporte une lame d'extension dans la couronne 2.

Chaque lame d'extension est préférentiellement plane comme le renfort 5. Cependant, elle peut avoir une section droite quelconque, comme par exemple circulaire ou carrée.

Chaque lame peut être par exemple en métal, en matière plastique, en fibre de verre, en matériau composite, en céramique, ou préférentiellement en nylon renforcé.

Chaque lame s'étend sur une distance quelconque dans la couronne 2. Elle peut par exemple recouvrir environ 60° sur la couronne.

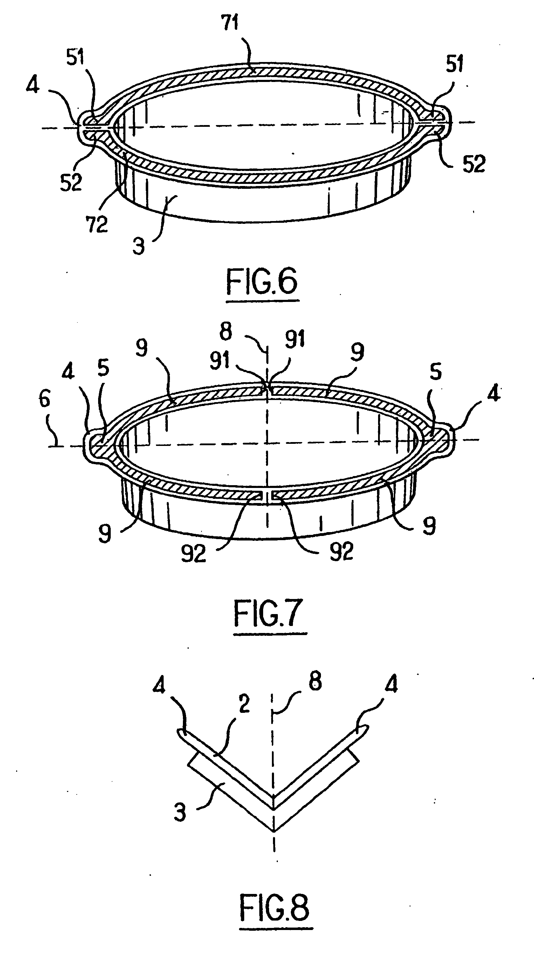

La figure 6 représente un mode de réalisation préféré de cette variante selon lequel chaque lame relie deux renforts de deux zones 4 de préhension différentes et couvre ainsi sensiblement 180°. Ainsi la lame 71 relie les deux moitiés 51 des deux zones 4 opposées, et la lame 72 relie les deux moitiés 51 des deux zones 4 opposées.

On comprend que de telle lame permette un pliage comme celui représenté à la figure 5 plus facile, du fait de leur extension dans la couronne 2.

Selon une variante, les deux moitiés 51 et 52 de chaque renfort 5 sont reliées entre elles par des moyens formant charnière.

La figure 7 représente schématiquement un autre mode de réalisation d'un moule selon l'invention.

Selon ce mode de réalisation, chaque renfort 5, non divisé en deux moitiés comme c'est le cas sur les figure 4 et 6, comporte une lame d'extension 9 dans la couronne 2. Cependant, contrairement au mode de réalisation de la figure 6, la lame 9 s'étendant de part et d'autre du renfort 5 monobloc.

Chaque lame d'extension 9 est préférentiellement plane comme le renfort 5. Cependant, elle peut avoir une section droite quelconque, comme par exemple circulaire ou carrée.

Chaque lame 9 peut être par exemple en métal, en matière plastique, en fibre de verre, en matériau composite, en céramique, ou préférentiellement en nylon renforcé.

Les extrémités des lames d'extension sont arrondies et non tranchantes. Cela évite de détériorer et de couper le silicone lors du pliage du moule selon la figure 8.

Chaque lame 9 s'étend sur une distance quelconque dans la couronne 2. Elle peut par exemple recouvrir environ 60° ou 120° sur la couronne 2.

La figure 7 représente un mode de réalisation préféré selon lequel les extrémités 91 et 92 des lames 9 d'extension viennent sensiblement au niveau d'un plan 8 perpendiculaire à un plan 6 passant sensiblement par le centre des zones 4 de préhension. Chaque lame 9 couvre ainsi sensiblement 180°.

On comprend que de telle lame permette un pliage comme celui représenté à la figure 8 plus facile, du fait de leur extension dans la couronne 2. On note que ce pliage est perpendiculaire au pliage prévu sur la figure 5.

Selon une variante, les extrémités 91 et 92 des lames d'extension sont reliées entre elles par des moyens formant charnière.

Les modes de réalisation comportant des lames d'extension dans la couronne 2 comportent les mêmes propriétés que les moules sans lame, à savoir un contrôle de la géométrie de l'embouchure 3, et un contrôle de la coplanéité et horizontalité des zones 4, notamment du fait que les lames ne couvrent pas l'ensemble de la couronne, ce qui permet un pliage de la couronne.

Les développements qui précèdent s'appliquent à une embouchure 3 sensiblement circulaire ou elliptique et une cuvette 1 correspondante de section sensiblement circulaire ou elliptique. Bien entendu, l'embouchure 3 et la cuvette 1 peuvent avoir une forme quelconque et peuvent par exemple être de forme rectangulaire, carrée, triangulaire, en étoile, en coeur, en pièce de puzzle, etc.

On peut également de façon associée avec les zones de préhension 4, éventuellement en association avec les renforts 5 au niveau de ces zones de préhension 4, et éventuellement encore en association avec les lames d'extension, prévoir un renfort au niveau de la base 10 visible sur les figures 1 et 2.

Ce renfort situé au niveau de la base, et donc au fond du moule, permet une manipulation et un démoulage plus faciles.

Le renfort au niveau de la base du moule peut comporter un jonc disposé sur le pourtour de la base. Le jonc est préférentiellement plan. Cependant, il peut avoir une section droite quelconque, comme par exemple circulaire ou carrée.

Le renfort peut également être une plaque ajourée ou non, noyée dans le matériau de la base.

Un tel renfort peut être en métal, en matière plastique, en fibre de verre, en matériau composite, en céramique, ou préférentiellement en nylon renforcé.

Bien entendu, un tel renfort au niveau de la base du moule peut être appliqué à un moule ne comportant pas de zone de préhension et ne comportant pas de renfort au niveau de la couronne du moule.

Un tel renfort peut éventuellement être amovible sur la base du moule.

## Revendications

1. Moule souple en silicone comportant une cuvette (1) et une couronne (2) périphérique définissant une embouchure (3) de la cuvette, comportant au niveau de la couronne deux zones (4) de préhension généralement planes au moins sensiblement opposées sur la couronne (2), les deux zones (4) présentant une extension suffisante pour permettre à un utilisateur de contrôler la géométrie de la couronne (2), ainsi que l'horizontalité et la coplanéité des deux zones (4) de préhension,
chaque zone (4) de préhension comportant un renfort (5) sensiblement plan noyé dans le silicone, **caractérisé en ce que** chaque renfort (5) est divisé en deux parties (51, 52) sensiblement symétriques par rapport à un plan (6) passant sensiblement par le centre des zones de préhension.

2. Moule selon la revendication 1, **caractérisé en ce que** chaque moitié de renfort (51,52) comporte une lame d'extension (9) dans la couronne.

3. Moule selon la revendication 2, **caractérisé en ce que** chaque lame (71, 72) relie deux renforts de deux zones de préhension différentes et couvre ainsi sensiblement 180°.

4. Moule selon la revendication 1, **caractérisé en ce que** chaque renfort (5) comporte une lame d'extension (9) dans la couronne (2), la lame (9) s'étendant de part et d'autre du renfort (5).

5. Moule selon la revendication 4, **caractérisé en ce que** les extrémités des lames d'extension viennent sensiblement au niveau d'un plan (8) perpendiculaire à un plan (6) passant sensiblement par le centre des zones de préhension, chaque lame couvrant ainsi sensiblement 180°.

6. Moule selon la revendication 1, **caractérisé en ce que** les moitiés (51, 52) des renforts (5) sont reliées par des moyens formant charnière.

7. Moule selon la revendication 2, **caractérisé en ce que** les lames d'extension (9) des renforts (5) sont reliées par des moyens formant charnière.

8. Moule selon l'une des revendications 1 à 7, **caractérisé en ce que** la couronne (2) comporte une épaisseur de matière silicone plus importante que l'épaisseur des parois de la cuvette (10).

9. Moule selon l'une des revendications 2 à 8, **caractérisé en ce que** chaque lame d'extension (9) est sensiblement plane.

10. Moule selon l'une des revendications 1 à 9, **caractérisé en ce qu'**il comporte un renfort au niveau de la base (10) de la cuvette (1).

11. Moule selon la revendication 10, **caractérisé en ce que** le renfort comporte un jonc sur le pourtour de la base (10).

12. Moule selon la revendication 10, **caractérisé en ce que** le renfort comporte une plaque.

## Patentansprüche

1. Flexible Backform aus Silikon, die eine Schüssel (1) und einen Umfangkranz (2) aufweist, der eine Mündung (3) der Schüssel definiert, mit auf der Höhe des Kranzes zwei allgemein planen Griffzonen (4), welche wenigstens im Wesentlichen gegenüberliegend auf dem Kranz (2) angeordnet sind, wobei die beiden Zonen (4) eine ausreichende Ausdehnung aufweisen, um einer Bedienungsperson zu ermöglichen, die Gestalt des Kranzes (2) sowie die Horizontalität und die Co-Ebenheit der beiden Griffzonen (4) zu beherrschen, wobei jede Griffzone (4) eine im Wesentlichen ebene, in dem Silikon eingetauchte Verstärkung (5) aufweist, und jede Verstärkung (5) im Wesentlichen bezüglich einer Ebene (6), die im Wesentlichen durch die Mitte der Griffzonen geht, in zwei Abschnitte (51, 52) aufgeteilt ist.

2. Backform nach Anspruch 1, in welcher jede Verstärkungshälfte (51, 52) eine Erweiterungsklinge (9) in dem Kranz aufweist.

3. Backform nach Anspruch 2, in welcher jede Klinge (71, 72) zwei Verstärkungen von zwei unterschiedlichen Griffzonen verbindet und somit im Wesentlichen 180° abdeckt.

4. Backform nach Anspruch 1, in welcher jede Verstärkung (5) eine Erweiterungsklinge (9) in dem Kranz (2) aufweist, wobei sich die Klinge (9) beiderseits der Verstärkung (5) erstreckt.

5. Backform nach Anspruch 4, in welcher die Enden der Erweiterungsklinge im Wesentlichen auf der Höhe einer Ebene (8) liegen, die senkrecht zu einer Ebene (6) ist, die im Wesentlichen durch die Mitte der Griffzonen geht, wobei eine jede Klinge somit im Wesentlichen 180° abdeckt.

6. Backform nach Anspruch 1, in welcher die Hälften (51, 52) der Verstärkungen (5) durch scharnierbildende Mittel verbunden sind.

7. Backform nach Anspruch 2, in welcher die Erweiterungsklingen (9) der Verstärkungen (5) durch scharnierbildende Mittel verbunden sind.

8. Backform nach einem der Ansprüche 1 bis 7, in welcher der Kranz (2) eine Silikonmaterialdicke aufweist, die größer ist als die Dicke der Seitenwände der Schüssel (10).

9. Backform nach einem der Ansprüche 2 bis 8, in welcher die Erweiterungsklinge (9) im Wesentlichen eben ist.

10. Backform nach einem der Ansprüche 1 bis 9, in welcher sie eine Verstärkung auf der Höhe der Basis (10) der Schüssel (1) aufweist.

11. Backform nach Anspruch 10, in welcher die Verstärkung über den Umfang der Basis (10) eine Binse aufweist.

12. Backform nach Anspruch 10, in welcher die Verstärkung eine Platte aufweist.

## Claims

1. A flexible silicone mould comprising a bowl (1) and a peripheral rim (2) defining an opening (3) of the bowl, having at the rim two gripping zones (4), generally flat, at least approximately opposed on the rim (2), the two zones (4) having a length sufficient to enable a user to control the geometry of the rim (2), as well as whether the horizontality and coplanar state of the two gripping zones (4), each gripping zone (4) comprising an approximately flat reinforcement (5) embedded in the silicone, and each reinforcement (5) is divided into two parts (51, 52) approximately symmetrical with respect to a plane (6) passing approximately through the centre of the gripping zones.

2. A mould according to claim 1, wherein each reinforcement half (51, 52) comprises an extension strip (9) in the rim.

3. A mould according to claim 2, wherein each strip (71, 72) connects two reinforcements of two different gripping zones and thus covers approximately 180°.

4. A mould according to claim 1, wherein each reinforcement (5) comprises an extension strip (9) in the rim (2), the strip (9) extending on each side of the reinforcement (5).

5. A mould according to claim 4, wherein the ends of the extension strips come approximately to a plane (8) perpendicular to a plane (6) passing approximately through the centre of the gripping zones, each strip thus covering approximately 180°.

6. A mould according to claim 1, wherein the halves (51, 52) of the reinforcements (5) are connected by means forming a hinge.

7. A mould according to claim 2, wherein the extension strips (9) of the reinforcements (5) are connected by means forming a hinge.

8. A mould according to any one of claims 1 to 7, wherein the rim (2) has a thickness of silicone material greater than the thickness of the walls of the bowl (10).

9. A mould according to any one of claims 2 to 8, wherein each extension strip (9) is approximately flat.

10. A mould according to any one of claims 1 to 9, wherein it comprises a reinforcement at the base (10) of the bowl (1).

11. A mould according to claim 10, wherein the reinforcement comprises a ring on the circumference of the base (10).

12. A mould according to claim 10, wherein the reinforcement comprises a plate.
